# EUROPÄISCHE PATENTSCHRIFT

(11) **EP 0 393 302 B1**
(45) Veröffentlichungstag und Bekanntmachung des Hinweises auf die Patenterteilung: **10.05.1995**
(21) Anmeldenummer: 90100251.9
(22) Anmeldetag: 06.01.1990
(51) Int. Cl.: G06F 13/24

(54) **Computer mit einer Mehrzahl von steckbaren Baugruppen**
Computer with a plurality of installable circuit cards
Ordinateur avec une pluralité de cartes enfichables

(30) Priorität: 19.04.1989 DE 8904936 U
(43) Veröffentlichungstag der Anmeldung: 24.10.1990
(73) Patentinhaber: FORCE COMPUTERS GMBH, D-85579 Neubiberg (DE)
(72) Erfinder: Skordou, Evangelos, D-8059 Langenpreising (DE); Hofmann, Stefan, D-8035 Gauting (DE)
(74) Vertreter: Baronetzky, Klaus, Dipl.-Ing.

(56) Entgegenhaltungen:
- EP-A- 0 167 827
- US-A- 4 271 464
- US-A- 4 799 148
- IBM TECHNICAL DISCLOSURE BULLETIN, Band 27, Nr. 1B, Juni 1984, Seiten 554-556,New York, US; R.E. RUSSELL et al.: "Interrupt request circuit"
- Lexikon der Mikroelektronik, Mikroelektronik und Mikrocomputertechnik, 1978, IWT Verlag, München, Seite 119
- IBM technical disclosure bulletin, vol.31, no.5, okt 1988, New York, pages 131-132, "adapter card for personal computer"

## Beschreibung

Die Erfindung betrifft einen Computer mit einer Mehrzahl von steckbaren Baugruppen, gemäß dem Oberbegriff von Anspruch 1.

Aus der EP-167 827 ist ein Schaltkreis für die Zuteilung von Interrupts gleichen Interruptlevels bekannt geworden. Diese Schaltung arbeitet mit einer Mehrzahl von Flip-Flops. Das "Interruptsharing" erfolgt dadurch, daß über einen Interrupt ein Flip-Flop in einen Zustand geschaltet wird, der verhindert, daß ein weiterer Interrupt ausgelöst wird. Durch diese mit mehreren Flip-Flops realisierte Maßnahme wird das Weiterleiten von Interrupts verhindert. Diese Schaltung ist jedoch nur für eine feste Verdrahtung geeignet; Besondere Maßnahmen zur Beschleunigung sind nicht vorgesehen, und es findet im Grunde auch kein sogenanntes "Daisy Chaining" statt. Andererseits ist in manchen Fällen eine ortsabhängige Interruptprioritätssteuerung wünschenswert.

Aus der Druckschrif "IBM Technical Disclosure Bulletin, Vol. 31, No. 5, Oct. 1988" "ADAPTER CARD FOR PERSONAL COMPUTER" ist eine PC-Steckkarte bekannt geworden, die mit einer Seite in sogenannte IBM-PC-kompatible Steckplätze von PCs einsteckbar und mit der anderen Seite in Steckplätze von sogenannten PS/2-Systemen einsteckbar ist. Die betreffenden Leitungen entsprechen einander vielfach, so daß je eine Aktivierungsschaltung über einen Interface-Schaltkreis vorgesehen ist, der teilweise wohl auch in sogenannter Open-Collector-Verschaltung arbeiten könnte und jedenfalls die verschiedenen Bussignale, also Interruptsignale, sonstige Bussteuersignale, Adressignale und Datensignale umschaltet.

Auch bei dieser Lösung ist eine Prioritätssteuerung für die Interrupts nicht ortsabhängig vorgesehen; ein Daisy Chaining ist nicht bekannt geworden und besondere Maßnahmen zur Geschwindigkeitssteigerung sind nicht ersichtlich.

Ferner ist aus der US-PS 4 799 148 ein Computer mit einer Mehrzahl einzelner Baugruppen bekannt, die je über Adress-Daten und Steuerbusse miteinander verbunden sind. In der Druckschrift ist in Zusammenhang mit dem Stand der Technik ein sogenanntes Daisy Chaining beschrieben, das jedoch hier als nachteilig empfunden wird und durch eine Kombination eines Read- mit einem Write-Strobe ersetzt wird.

Bei einem gattungsgemäßen Computer ist es bekannt, ein Interruptsignal über einen Bus zu leiten, wobei jede Baugruppe aus der Mehrzahl der steckbaren Baugruppen mit dem Bus galvanisch verbunden ist und detektiert, ob das betreffende Interruptsignal für sie bestimmt ist oder nicht. Hierzu ist eine Decodierschaltung auf der Baugruppe vorgesehen, mit welcher die Baugruppe feststellen kann, daß der entsprechende Interrupt für sie bestimmt ist und beim Eintreffen eines solchen eine entsprechende Bearbeitung durchführen kann.

Damit nun die weiteren Baugruppen ebenfalls für sie bestimmte Interrupts bearbeiten können, muß die je betrachtete Baugruppe den Interrupt schnellstmöglich weiterleiten, wenn er nicht für sie bestimmt ist. Dies kann am besten innerhalb eines Zeitfensters geschehen, das besonders eng ist, wenn eine Echtzeitverarbeitung gewünscht ist, da dann eine worst-case-Betrachtung durchgeführt werden muß. Schlimmstenfalls müssen nämlich die Interrupts durch alle Baugruppen geleitet werden, wobei auch eine Anzahl von beispielsweise 20 steckbaren Baugruppen in Betracht gezogen werden muß.

Andererseits ist es auch bekannt, die Interruptsignale ohne Verzögerung allen Baugruppen zugleich zuzuleiten, so daß dann die je gewünschte Baugruppe den Interrupt erkennt und ein entsprechendes Acknowledge-Signal abgeben kann. Häufig ist jedoch eine Prioritätsabstufung gewünscht, die ortsbezogen ist. Für diese Fälle kommt eine parallele Zuleitung der Interrupts zu sämtlichen Baugruppen in galvanischer Verbindung nicht in Betracht.

Ein besonderes Problem tritt auch auf, wenn Baugruppen häufig gewechselt werden, wobei das Merkmal der Steckbarkeit der Baugruppen zur leichteren Anpassung des Computers an die gewünschte Systemkonfiguration ausgenutzt wird. Dieser bei steckplatzunabhängigen Computern häufige Wechsel wird jedoch bei Steckplätze mit unterschiedlichen Adressen ansprechenden und eine ortsabhängige Prioritätsfestlegung ermöglichenden Computern in der Regel nicht angewendet. Bei entfernter Baugruppe müßten dann Maßnahmen getroffen werden, um dennoch die Interruptverarbeitung nicht zu stören.

Diese wären jedoch häufig umständlich und machen den Vorteil der leichten Steckbarkeit der Baugruppen zunichte. Es wäre beispielsweise denkbar, daß entsprechende Interruptsignal für die fehlende Baugruppe kurzzuschließen, indem eine Lötbrücke, ein Jumper, ein Mikroschalter, der auf das Vorhandensein der Baugruppe anspricht, oder dgl. verwendet wird. Auch diese wären aber umständlich zu bedienen, würden häufig vergessen bzw. würden konstruktive Änderungen erfordern, die mit erheblichen Kosten, beispielsweise aufgrund einer zusätzlich erforderlichen Abschirmung, verbunden wären.

Es ist daher Aufgabe der Erfindung, einen Computer mit einer Mehrzahl von steckbaren Baugruppen gemäß dem Oberbegriff von Anspruch 1 zu schaffen, bei welchen die Vorteile der Steckbarkeit der Baugruppen auch bei Interruptsteuerung, insbesondere auch bei verschiedenen Interruptprioritäten, aufrechterhalten bleiben, ohne daß Standard-Steckkarten eine besondere Anpassung erfahren müßten.

Diese Aufgabe wird erfindungsgemäß durch Anspruch 1 gelöst. Vorteilhafte Weiterbildungen ergeben sich aus den Unteransprüchen. Besonders günstig ist es, daß mit sehr einfachen und preiswert verwirklichbaren Mitteln eine Interruptverarbeitung völlig unabhängig davon erfolgen kann, ob eine Baugruppe, für die der Interrupt nicht bestimmt ist, eingesteckt ist oder nicht. Dies gilt auch für eine Baugruppem, zu der das Interruptsignal vor der betrachteten Baugruppe gelangen würde, wenn diese eingesteckt wäre. Ein Master-Slave-Verhältnis bleibt in der gewünschten Weise aufrechterhalten.

Natürlich ist es erforderlich, sicherzustellen, daß nicht ein Interrupt für eine nicht vorhandene Baugruppe generiert wird oder, sollte dies doch der Fall sein, daß mittels einer Time-out-Prüfung sichergestellt ist, daß eine Weiterbearbeitung möglich ist. Ansonsten erfolgt die Interruptsignal-Verarbeitung völlig transparent, wobei es besonders günstig ist, daß die erfindungsgemäße Halteschaltung praktisch die nicht vorhandene Baugruppe simuliert und die zeitliche Verzögerung, die durch die Halteschaltung bewirkt wird, innerhalb des gewünschten Zeitfensters verbleibt.

Beispielsweise kann eine Gatterlaufzeit bei einem Gatter in HCT-Technologie zu acht Nanosekunden gewählt werden. Bei der worst-case-Betrachtung und zwanzig steckbaren Baugruppen ergäbe dies eine Gesamt-Laufzeit von 20 x 8 ns, also 160 ns.

Mit der erfindungsgemäßen Simulation bleibt also die zeitliche Verzögerung im Rahmen und zugleich erheblich unter der Antwortzeit.

Günstig ist es auch, wenn die Halteschaltung offen konzipiert ist, indem beispielsweise ein Open-Collector-Ausgang verwendet wird, der die Einleitung eines Interrupt-Ausgangssignals seitens der je betrachteten Baugruppe ermöglicht, ohne daß zwei Logik-Schaltungsausgänge gegeneinander arbeiten würden. Durch die Verwendung eines Pull-Down-Widerstandes an dem für die Weiterleitung des Interruptsignals verantwortlichen Gattereingang der Halteschaltung kann bei nicht vorhandener Baugruppe und negativer Logik (logisch "Null" entspricht dem aktiven Zustand) die Weiterleitung des Interruptsignals bei nicht vorhandener Baugruppe sichergestellt werden. Bei der angesprochenen Active-Low-Logik verwendet man am besten ein einfaches ODER-Gatter, wobei auch noch beispielsweise vier Halteschaltungen für dementsprechend vier Baugruppen in einem integrierten Schaltkreis zusammengefaßt werden können.

Das Ausgangs-Interruptsignal wird dann je als Eingangssignal der benachbarten Baugruppe zugeleitet.

Das Interruptsignal kann als Anforderungssignal für ein Betriebsmittel bzw. als das entsprechende Bestätigungsignal hierzu ausgebildet sein. Eine gesteckte betrachtete Baugruppe unterdrückt dann die Weiterleitung des Interruptsignals, wenn sie selbst das Betriebsmittel benötigt hat, wozu in an sich bekannter Weise eine Decodierschaltung auf der Baugruppe vorgesehen ist. Überhaupt können handelsübliche Baugruppen verwendet werden, die für ein genormtes Bussystem verwendet werden können, denn es ist keine konstruktive Anpassung der beispielsweise als Steckkarten ausgebildeten Baugruppen erforderlich.

Auch kann das Wechseln der Baugruppen innerhalb von Sekunden erfolgen, wobei die Tatsache ausgenutzt wird, daß erfindungsgemäß eine automatisierte Daisy-Chain-Verschaltung vorgesehen ist.

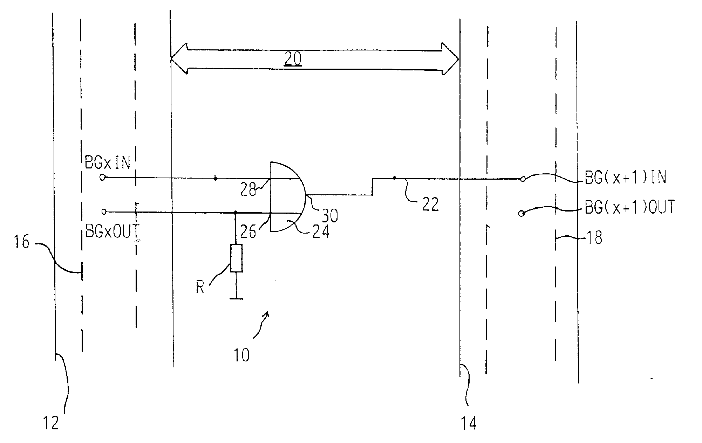

Weitere Einzelheiten, Merkmale und Vorteile ergeben sich aus der nachstehenden Beschreibung eines Ausführungsbeispiels anhand der Zeichnung.

Die einzige Figur zeigt eine beispielsweise Ausbildung einer erfindungsgemäßen Halteschaltung.

In der einzigen Figur ist eine Halteschaltung 10 dargestellt, die zwischen zwei Steckplätzen 12 und 14 mit gestrichelt angedeuteten Baugruppen 16 und 18 vorgesehen ist. Zwischen den Steckplätzen 12 und 14 und weiteren Steckplätzen, die nicht dargestellt sind, erstreckt sich ein Bus 20, der u.a. eine Interruptsignalleitung 22 aufweist. Das Interruptsignal auf der Interruptleitung 22 wird die Halteschaltung 10 zugeleitet, wenn es von der Baugruppe 16 zur Baugruppe 18 gelangen soll.

Die betrachtete Baugruppe 16 weist hierzu zwei Anschlüsse BGxIN und BGxOUT auf, wobei der Anschluß BGxIN mit der Interruptsignalleitung der vorhergehenden Baugruppe, die nicht dargestellt ist, verbunden ist. Entsprechend ist die Interruptsignalleitung 22 mit dem Eingang BG(x+1)IN der nachfolgenden Baugruppe 18 verbunden, die entsprechend der Baugruppe 16 zusätzlich einen Anschluß BG(x+1)OUT aufweist.

Der Anschluß BGxOUT bzw. BG(x+1)OUT ist als Ausgangsanschluß für die jeweilige Baugruppe 16 bzw. 18 ausgelegt, so daß ein Interruptsignal, das von der jeweiligen Baugruppe 16 bzw. 18 erzeugt wird, den je betrachteten Anschluß auf den logischen Pegel "Null" bringt. Aufgrund der verwendeten negativen oder Active-Low-Logik wirkt das Ausgangssignal mit dem logischen Pegel "Null" als Aktivierungssignal.

Die Halteschaltung 10 weist ein ODER-Gatter 24 und einen Widerstand R auf. Der Widerstand R ist mit dem Anschluß BGxOUT und zugleich mit einem Eingangsanschluß 26 des Oder-Gatters 24 verbunden und wirkt als Pull-Down-Widerstand. Dementsprechend ist der andere Anschluß des Widerstands R mit Masse verbunden.

Ein weiterer Eingangsanschluß 28 des ODER-Gatters 24 ist mit dem Anschluß BGxIN verbunden. Über diese Verbindung wird ein Interruptsignal der je vorherigen Baugruppe 16 der nachfolgenden Halteschaltung 10 zugeleitet.

Das ODER-Gatter 24 weist ferner einen Ausgangsanschluß 30 auf, der mit der Interruptsignalleitung 22 verbunden ist. Bei der verwendeten Logik ist der logische Pegel des Ausgangsanschlusses 30 lediglich dann logisch "Null", also aktiv, wenn sowohl an dem Eingangsanschluß 26 als auch an dem Eingangsanschluß 28 des ODER-Gatters 24 der logische Pegel "Null" anliegt. Andersherum betrachtet, bedeutet dies aber, daß, wenn der logische Pegel an dem Anschluß BGxIN "Null" ist, daß durch die Halteschaltung 10 der logische Pegel des Anschlusses BGxOUT mit einer der Gatter-laufzeit des ODER-Gatters 24 entsprechenden Verzögerung auf die Interruptsignalleitung 22 gelegt wird und damit als Interruptsignal dem Eingang BG(x+1)IN zugeleitet wird.

In dem dargestellten Ausführungsbeispiel wird als Interruptsignal ein Betriebsmittelzuteilungs-Bestätigungssignal (Bus Grant) verwendet. Wenn dementsprechend das an der Baugruppe 16 an dem Anschluß BGxIN eingehende Signal logisch "Null" ist und die Baugruppe 16 die Interrupterzeugung nicht bewirkt hatte, wird BGxOUT auf "Null" gelegt. In diesem Falle liegt dann der logische Pegel "Null" an beiden Eingangsanschlüssen 26 und 28 des ODER-Gatter 24 an, so daß an dem Ausgangsanschluß 30 ebenfalls der logische Pegel "Null" anliegt. Wenn die Baugruppe 16 jedoch den entsprechenden Interrupt erzeugt hatte, wird der Ausgangsanschluß BGxOUT auf den logischen Pegel "Eins" gelegt. Das bedeutet, daß der logische Pegel auf der Interruptsignal-leitung 22 auf dem logischen Pegel "Eins" bleibt.

Damit ist es aber in der gewünschten Weise für die Baugruppe 16 möglich, den Interrupt als für sich bestimmt zu erkennen. Das Ausgangssignal BGxOUT wird dann auf logisch "Eins" geschaltet, und zwar gegen den Pull-Down-Widerstand R, so daß auf der Interruptsignalleitung 22 wiederum der logische Pegel "Eins" anliegt.

Hieraus ist ersichtlich, daß beim Nicht-Vorhandensein der Baugruppe 16 an dem Steckplatz 12 der Pull-Down-Widerstand R stets den Eingangsanschluß 26 auf den logischen Pegel "Null" legt. Deshalb kann eine nicht vorhanden Baugruppe 16 auch keinen Interrupt generiert haben bzw. als für sich bestimmt erkennen. Auch ist hieraus ersichtlich, daß dann stets das Signal am Anschluß BG(x+1)IN dem Signal am Anschluß BGxIN entspricht, so daß das Interruptsignal auf der Interruptsignalleitung 22 lediglich weitergeleitet wird.

Wie zuvor erwähnt, kann auch ein Open-Collector-Ausgang für das ODER-Gatter 24 verwendet werden. Hierdurch wird dann das Interruptsignal bei gesteckter Baugruppe 16 in die Interruptsignal-leitung 22 eingeleitet, während es über die Halteschaltung 10 geleitet wird, wenn die Baugruppe 16 entfernt ist.

Die Weiterleitung des Interruptsignals über das ODER-Gatter 24 erfolgt dann stets in dem gewünschten Zeitfenster, unabhängig davon, ob die Baugruppe 16 gesteckt ist oder nicht.

Günstig ist ferner, daß durch die Verwendung des ODER-Gatters 24, beispielsweise in CMOS-Technik, die Anschlüsse BGxIN und BGxOUT stets nur sehr gering belastet werden. Ferner ist es selbstverständlich möglich, anstelle der dargestellten negativen Active-Low-Logik positive oder Active-High-Logik zu verwenden, wobei es sich versteht, daß die verwendeten Gatter entsprechend angepaßt werden müssen.

## Patentansprüche

1. Computer mit einer Mehrzahl von hinsichtlich einer Interrupt-Signalleitung in Daisy-Chain-Technik verbundenen, steckbaren Baugruppen, die je über einen Bus (20) miteinander verbunden sind, wobei der Bus (20) die Interrupt-Signalleitung (22) aufweist und über die Baugruppe (16, 18) ein Interruptsignal innerhalb eines Zeitfensters weiterleitbar ist, wenn es für eine andere Baugruppe (16, 18) bestimmt ist, und wobei über eine Decodierschaltung der Baugruppe (16, 18) die Weiterleitung des Interruptsignals unterbindbar und innerhalb einer Antwortzeit eine Interruptverarbeitung durch die Baugruppe (16, 18) durchführbar ist, wenn es für die Baugruppe (16, 18) bestimmt ist, dadurch **gekennzeichnet**, daß eine bei demontierter Baugruppe (16, 18) aktivierbare Halteschaltung (10), mit deren Ausgang das Interruptsignal mit einer zeitlichen Verzögerung weiterleitbar ist, die erheblich unter der Antwortzeit liegt, mit der Interrupt-Signalleitung (22) verbunden ist, wobei das Interruptsignal bei der Durchleitung durch die Steckplätze der Baugruppe (16, 18) je eine geringe zeitliche Verzögerung erfährt, unabhängig davon, ob die Baugruppe gesteckt ist oder nicht, so daß die Gesamtlaufzeit aufgrund der durch die Halteschaltungen (10) erzeugten Verzögerungen innerhalb einer der Gesamtheit der gewünschten Zeitfenster entsprechenden Zeit verbleibt.

2. Computer nach Anspruch 1 , dadurch gekennzeichnet, daß die zeitliche Verzögerung der Laufzeit eines schnellen Gatters (24) entspricht und auch erheblich unter der Bus-Zykluszeit liegt.

3. Computer nach Anspruch 1 oder 2, dadurch gekennzeichnet, daß die Halteschaltung (10) ein Gatter (24) aufweist, das auf einem Motherboard angeordnet ist, in welches die Baugruppen (16, 18) steckbar sind.

4. Computer nach einem der vorhergehenden Ansprüche, dadurch gekennzeichnet, daß die Halteschaltung (10) einen Widerstand (R) aufweist, der mit einem Eingangsanschluß (26) eines Gatters (24) verbunden ist und mit welchem der Ausgangsanschluß (30) des Gatters (24) in einen der Abwesenheit des Interruptsignals entsprechenden logischen Zustand bringbar ist.

5. Computer nach einem der vorhergehenden Ansprüche, dadurch gekennzeichnet, daß die Halteschaltung (10) auch bei eingesteckter Baugruppe (16, 18) arbeitet und am Eingang der Halteschaltung (10) ein Widerstand (R) angeordnet ist, und gegen den Widerstand der Eingang der Halteschaltung so schaltbar ist, daß die Weiterleitung des Interruptsignals unterbunden ist.

6. Computer nach einem der vorhergehenden Ansprüche, dadurch gekennzeichnet, daß die Halteschaltung (16) einen Open-Collector-Ausgang aufweist, mit welchem bei eingesteckter Baugruppe (16, 18) und einem bestimmten Zustand der Baugruppe (16) die Weiterleitung des Tnterruptsignals von einem entsprechenden Ausgang der Baugruppe (16) unterbindbar ist und ein Interrupt erzeugbar ist.

7. Computer nach einem der vorhergehenden Ansprüche, dadurch gekennzeichnet, daß ein Interruptausgang der Baugruppe (16) vorgesehen ist, der bei eingesteckter Baugruppe (16) entweder mit dem Eingang oder dem Open-Collector-Ausgang der Halteschaltung (10) verbunden ist und daß ein an dem Ausgang anstehendes Interruptsignal über die Interruptsignalleitung (22) mindestens der nächsten Baugruppe (16) zuleitbar ist. **I**nterruptsignalleitung (22) mindestens der nächsten Baugruppe (16) zuleitbar ist.

8. Computer nach einem der vorhergehenden Ansprüche, dadurch gekennzeichnet, daß die Mehrzahl der Baugruppen (16, 18) elektrisch hintereinander angeordnet sind und jeder Baugruppe (16, 19) eine Halteschaltung (10) zugeordnet ist.

9. Computer nach einem der vorhergehenden Ansprüche, dadurch gekennzeichnet, daß die Baugruppen (16, 18) an Steckplätzen (12, 14) nebeneinander angeordnet sind, deren Adresse feststellbar ist, wobei insbesondere eine Prioritätsreihenfolge zwischen eine höherprioren (Master-Baugruppe) und einer niedrigerprioren (Slave-Baugruppe) vorgesehen ist.

10. Computer nach einem der vorhergehenden Ansprüche, dadurch gekennzeichnet, daß das Interruptsignal als Bus-Zuteilsignal ausgebildet ist, mit welchem einer einen entsprechenden Interrupt auslösenden Baugruppe (16, 18) mindestens eine Teil des Busses (20) logisch zuteilbar ist.

11. Computer nach einem der vorhergehenden Ansprüche, dadurch gekennzeichnet, daß das Tnterruptsignal als Bestätigungssignal ausgebildet ist, dessen Weiterleitung zu der nächsten Baugruppe (18) bei gesteckter betrachteter Baugruppe (16) verhinderbar ist, wenn die betrachtete Baugruppe (16) das Bestätigungssignal als für sich bestimmt erkennt.

12. Computer nach einem der vorhergehenden Ansprüche, dadurch gekennzeichnet, daß das Interruptsignal als Interrupt-Acknowledge-Signal die Zuteilung eines Betriebsmittels bei gesteckter Baugruppe durchführt, wobei das Betriebsmittel insbesondere der Bus (20) ist, und die Weiterleitung des Interruptsignals bei gesteckter betrachteter Baugruppe (16) zur nächsten gesteckten Baugruppe (18) verhinderbar ist, wenn die betrachtete Baugruppe (16) das Interruptsignal ursprünglich ausgelöst hatte.

## Claims

1. Computer with a plurality of plug-in assemblies which are connected in relation to an interrupt signal line, according to the daisychain technique, each of these assemblies being connected to every one of the others via a bus (20) which includes the interrupt signal line (22), and an interrupt signal being onwardly transmissible via the assembly (16, 18), within a time window, if intended for another assembly (16, 18), while if the interrupt signal is intended for the assembly (16, 18) its onward transmission is preventable through the agency of a decoding circuit which is associated with the assembly (16, 18) and the assembly (16, 18) can execute an interrupt processing operation within a response time, characterized in that a holding circuit (10) which can be activated with the assembly (16, 18) removed is connected to the interrupt signal line (22), this holding circuit (10) having an output by means of which the interrupt signal is onwardly transmissible with a time delay that is substantially shorter than the response time, the interrupt signal experiencing a short time delay on each occasion that it is conducted through the plug-in connector locations which are associated with the assembly (16, 18), irrespective of whether or not the assembly is plugged in, so that the total delay time resulting from the time delays brought about by the holding circuits (10) remains within a time that corresponds to the combined total of the desired time windows.

2. Computer according to Claim 1, characterized in that the time delay corresponds to the delay time which is associated with a fast gate (24), and is also substantially shorter than the bus cycle time.

3. Computer according to Claim 1 or 2, characterized in that the holding circuit (10) includes a gate (24) which is located on a motherboard, into which motherboard the assemblies (16, 18) can be plugged.

4. Computer according to any one of the preceding Claims, characterized in that the holding circuit (10) includes a resistance (R) which is connected to an input terminal (26) of a gate (24) and by means of which the output terminal (30) of the gate (24) can be brought to a logic condition corresponding to the absence of the interrupt signal.

5. Computer according to any one of the preceding Claims, characterized in that the holding circuit (10) also functions with the assembly (16, 18) plugged in, and a resistance (R) is located at the input of the holding circuit (10), said holding circuit input being switchable, against the resistance, in a manner such that onward transmission of the interrupt signal is prevented.

6. Computer according to any one of the preceding Claims, characterized in that the holding circuit (10) has an open collector output, by means of which it is possible, with the assembly (16, 18) plugged in and with the assembly (16) in a defined condition, to prevent onward transmission of the interrupt signal from a corresponding output of the assembly (16), and to bring about an interrupt.

7. Computer according to any one of the preceding Claims, characterized in that the assembly (16) is provided with an interrupt output which, with the assembly (16) plugged in, is connected either to the input or to the open collector output of the holding circuit (10), and in that an interrupt signal present at the output can be supplied to at least the next assembly (16) via the interrupt signal line (22).

8. Computer according to any one of the preceding Claims, characterized in that the majority of the assemblies (16, 18) are arranged, electrically, in series, and a holding circuit (10) is assigned to each assembly (16, 19).

9. Computer according to any one of the preceding Claims, characterized in that the assemblies (16, 18) are installed at plug-in connector locations (12, 14), one beside the other, the address thereof being detectable, and, in particular, with the designation of a priority sequence between a higher-priority (master) assembly and a lower-priority (slave) assembly.

10. Computer according to any one of the preceding Claims, characterized in that the interrupt signal is configured as a bus assignment signal, by means of which at least a portion of the bus (20) is logically assignable to an assembly (16, 18) which initiates a corresponding interrupt.

11. Computer according to any one of the preceding Claims, characterized in that the interrupt signal is configured as an acknowledgment signal, its onward transmission to the next assembly (18), with the assembly (16) in question plugged in, being preventable if the assembly (16) in question recognizes the acknowledgment signal as intended for itself.

12. Computer according to any one of the preceding Claims, characterized in that, with the assembly plugged in, the interrupt signal, as an interrupt-acknowledge signal, brings about the assignation of an operating resource, this operating resource being, in particular, the bus (20), and with the assembly (16) in question plugged in, onward transmission of the interrupt signal to the next plugged-in assembly (18) is preventable if the interrupt signal had originally been initiated by the assembly (16) in question.

## Revendications

1. Ordinateur avec plusieurs sous-ensembles enfichables, qui, par rapport à une ligne de signaux d'interruption, sont reliés selon une technique de connexion en guirlande et qui sont reliés entre eux par le biais d'un bus (20), le bus (20) présentant la ligne de signaux d'interruption (22), et un signal d'interruption pouvant être transmis par le biais du sous-ensemble (16, 18) à l'intérieur d'une fenêtre de temps quand ce signal est destiné à un autre sous-ensemble (16, 18), la transmission du signal d'interruption pouvant être empêchée par le biais d'un circuit de décodage du sous-ensemble (16, 18) et un traitement d'interruption pouvant être effectué par le sous-ensemble (16, 18) à l'intérieur d'un temps de réponse quand ce signal est destiné au sous-ensemble (16, 18), caractérisé en ce qu'un circuit de retenue (10), qui peut être activé lorsque le sous-ensemble (16, 18) est démonté, le signal d'interruption pouvant être, avec la sortie de ce circuit de maintien, transmis avec une temporisation qui est très inférieure au temps de réponse, est relié à la ligne de signaux d'interruption (22), le signal d'interruption subissant, lors de la traversée des emplacements d'enfichage du sous-ensemble (16, 18), une faible temporisation, que le sous-ensemble soit enfiché ou non, de telle façon que le temps d'exploitation total demeure, en raison des temporisations provoquées par les circuits de maintien (10), à l'intérieur d'une durée correspondant à la totalité de la fenêtre de temps souhaitée.

2. Ordinateur selon la revendication 1, caractérisé en ce que la temporisation correspond au temps d'exploitation d'une grille rapide (24) et est très inférieure au temps de cycle de bus.

3. Ordinateur selon la revendication 1 ou 2, caractérisé en ce que le circuit de maintien (10) présente une grille (24) qui est disposée sur une carte mère dans laquelle les sous-ensembles (16, 18) sont enfichables.

4. Ordinateur selon une des revendications précédentes, caractérisé en ce que le circuit de maintien (10) présente une résistance (R) qui est reliée à un raccordement d'entrée (26) d'une grille (24) et avec laquelle le raccordement de sortie (30) de la grille (24) peut être amené dans un état logique correspondant à l'absence du signal d'interruption.

5. Ordinateur selon une des revendications précédentes, caractérisé en ce que le circuit de maintien (10) fonctionne même quand le sous-ensemble (16, 18) est enfiché et en ce qu'une résistance (R) est disposée à l'entrée du circuit de maintien (10) et en ce que l'entrée du circuit de maintien peut être commutée,. contre la résistance, de façon à empêcher la transmission du signal d'interruption.

6. Ordinateur selon une des revendications précédentes, caractérisé en ce que le circuit de maintien (10) présente une sortie à collecteur ouvert avec laquelle, quand le sous-ensemble (16, 18) est enfiché et en présence d'un état déterminé du sous-ensemble (16), la transmission du signal d'interruption peut être empêchée par une sortie correspondante et en ce qu'une interruption peut être produite.

7. Ordinateur selon une des revendications précédentes, caractérisé en ce qu'il est prévu une sortie d'interruption du sous-ensemble (16) qui, lorsque le sous-ensemble (16) est enfiché, est reliée soit à l'entrée soit à la sortie à collecteur ouvert du circuit de maintien (10) et en ce qu'un signal d'interruption présent sur la sortie peut être conduit au moins au sous-ensemble (16) suivant par le biais de la ligne de signaux d'interruption (22).

8. Ordinateur selon l'une des revendications précédentes, caractérisé en ce que les multiples sous-ensembles (16, 18) sont disposés électriquement l'un derrière l'autre et en ce qu'un circuit de maintien (10) est affecté à chaque sous-ensemble (16, 18).

9. Ordinateur selon l'une des revendications précédentes, caractérisé en,ce que les sous-ensembles (16, 18) sont juxtaposés sur des emplacements d'enfichage (12, 14) dont l'adresse peut être déterminée; un ordre de priorité étant prévu entre une priorité haute (sous-ensemble maître) et une priorité basse (sous-ensemble esclave).

10. Ordinateur selon l'une des revendications précédentes, caractérisé en ce que le signal d'interruption est constitué comme un signal d'attribution de bus avec lequel au moins une partie du bus (20) peut être attribuée logiquement à un sous-ensemble (16, 18) déclenchant une interruption correspondante.

11. Ordinateur selon l'une des revendications précédentes, caractérisé en ce que le signal d'interruption est constitué comme un signal de confirmation dont la transmission au sous-ensemble suivant (18) peut être empêchée quand le sous-ensemble considéré (16) est enfiché, si le sous-ensemble considéré (16) détecte que le signal de confirmation lui est destiné.

12. Ordinateur selon l'une des revendications précédentes, caractérisé en ce que le signal d'interruption, en tant que signal d'accusé de réception d'interruption, effectue l'attribution d'un moyen d'exploitation quand le sous-ensemble est enfiché, le moyen d'exploitation étant en particulier le bus (20) et en ce que la transmission du signal d'interruption, quand le sous-ensemble considéré est enfiché, peut être-empêchée vers le sous-ensemble suivant enfiché (18) quand le sous-ensemble considéré (16) est à l'origine du déclenchement du signal d'interruption.
